# EUROPÄISCHE PATENTSCHRIFT

(11) **EP 2 228 798 B1**
(45) Veröffentlichungstag und Bekanntmachung des Hinweises auf die Patenterteilung: **18.01.2012**
(21) Anmeldenummer: 09003668.2
(22) Anmeldetag: 13.03.2009
(51) Int. Cl.: G06F 3/048, G11B 27/034, G11B 27/34

(54) **Verfahren und Vorrichtung zum Editieren eines Audiosignals**
Method and device for editing an audio signal
Procédé et dispositif d'édition d'un signal audio

(43) Veröffentlichungstag der Anmeldung: 15.09.2010
(73) Patentinhaber: JoboMusic GmbH, 6047 Kastanienbaum (CH)
(72) Erfinder: Johannes, Bochmann, 65817 Eppstein (DE)
(74) Vertreter: Tergau & Walkenhorst

(56) Entgegenhaltungen:
- WO-A-2009/032795
- GB-A- 2 330 668
- US-A1- 2004 021 644
- US-A1- 2004 150 668
- US-A1- 2007 252 821
- US-A1- 2009 028 359
- ANNE SEDES ET AL: "VISUALIZATION OF SOUND AS A CONTROL INTERFACE" PROCEEDINGS OF THE 7TH INTERNATIONAL CONFERENCE ON DIGITAL AUDIO EFFECTS, DAFX 04: NAPLES, OCTOBER 5-8, 2004,, [Online] 8. Oktober 2004 (2004-10-08), Seiten 390-394, XP007909377 ISBN: 978-88-901479-0-6 Gefunden im Internet: URL:http://dafx04.na.infn.it/WebProc/Proc/ P_390.pdf> [gefunden am 2009-07-31]
- NORBERT SCHNELL ET AL: "X-MICKS INTERACTIVE CONTENT BASED REAL-TIME AUDIO PROCESSING" PROCEEDINGS OF THE 9TH INTERNATIONAL CONFERENCE ON DIGITAL AUDIO EFFECTS (DAFX-06), MONTREAL, CANADA, SEPTEMBER 18-20, 2006,, 20. September 2006 (2006-09-20), Seiten DAFX/67-70, XP007909378
- NIELS BOGAARDS: "ANALYSIS-ASSISTED SOUND PROCESSING WITH AUDIOSCULPT" PROCEEDINGS OF THE 8TH INTERNATIONAL CONFERENCE ON DIGITAL AUDIO EFFECTS (DAFX-05), MADRID, SPAIN, SEPTEMBER 20-22, 2005,, [Online] 20. September 2005 (2005-09-20), Seiten 269-272, XP007909379 Gefunden im Internet: URL:http://dafx05.ssr.upm.es/Proc_DAFx05/P _269.pdf> [gefunden am 2009-07-31]
- MR T HEALY ET AL: "GUI FRONT-END FOR SPECTRAL WARPING" PROCEEDINGS OF THE 6TH INTERNATIONAL CONFERENCE ON DIGITAL AUDIO EFFECTS, DAFX 03 : LONDON, SEPTEMBER 8-11, 2003,, 11. September 2003 (2003-09-11), Seiten 1-3, XP007909380 ISBN: 978-0-904188-97-4
- JEAN BRESSON: "SOUND PROCESSING IN OPENMUSIC" PROCEEDINGS OF THE 9TH INTERNATIONAL CONFERENCE ON DIGITAL AUDIO EFFECTS (DAFX-06), MONTREAL, CANADA, SEPTEMBER 18-20, 2006,, 20. September 2006 (2006-09-20), Seiten DAFX/325-330, XP007909389

## Beschreibung

Die Erfindung bezieht sich auf ein Verfahren zum Editieren eines Audiosignals, gemäß dem Oberbegriff des Anspruchs 1 Sie bezieht sich weiter auf einen Audioeditor zur Durchführung des Verfahrens.

Audioeditoren, die zum Editieren eines Audiosignals durch ein Verfahren der genannten Art ausgelegt sind, kommen insbesondere bei der Tongestaltung, beispielsweise in einem Tonstudio oder dergleichen, zum Einsatz. Üblicherweise können Audioeditoren als Anwendungsprogramme für Computer oder Datenverarbeitungsanlagen ausgestaltet sein, mit denen man Klänge über eine Soundkarte oder eine angeschlossene digitale Schnittstelle digital aufnehmen, bearbeiten und wiedergeben kann. Unter Rückgriff auf digitale Bearbeitungstechniken bieten derartige Audioeditoren in der Art eines "virtuellen Tonstudios" vielfältige Bearbeitungsmöglichkeiten zur gezielten Manipulation oder Veränderung von Ton- oder Audiosequenzen, wie beispielsweise das Versehen mit Effekten und Filtern, die Änderungen von Tonhöhen, Lautstärke und Geschwindigkeit sowie so genannte Mastering-Funktionen wie beispielsweise das Komprimieren eines Audio-Datenstroms.

Um dabei die gezielte Bearbeitung von Audiosignalen zu ermöglichen, wird in einem derartigen Audioeditor üblicherweise ein eingehender, das Audiosignal repräsentierender Audiostrom zunächst in ein zugeordnetes Frequenzspektrum transformiert. Dieses Frequenzspektrum wird sodann auf einem Bildschirm oder Monitor dargestellt, wobei durch geeignete Eingabemittel wie beispielsweise eine Computermaus frequenzselektive Veränderungen im Frequenzspektrum vorgenommen werden können. Dabei kann üblicherweise die der jeweiligen Frequenz zugeordnete Amplitude Innerhalb des Spektrums verändert werden. Das modifizierte Frequenzspektrum wird anschließend in einen zugeordneten Ausgangs-Audiostrom transformiert, der das editierte Audiosignal repräsentiert. Die Transformation des Audiostroms in das zugeordnete Frequenzspektrum, also die Umsetzung des Audiosignal in den Frequenzraum, erfolgt dabei üblicherweise unter Rückgriff auf standardisierte Transformationskonzepte wie beispielsweise eine Fast- Fourier-Transformation (FFT). Die Rücktransformation des bearbeiteten Frequenzspektrums in den Zeit-Raum erfolgt sodann ebenfalls unter Rückgriff auf entsprechende standardisierte Verfahren.

Zur Transformation wird dabei der Audiostrom üblicherweise zeitabschnittsweise in die jeweils zugeordneten Frequenzspektren transformiert, so dass in der Art einer paketweisen Bearbeitung auch zeitaufgelöst das sich im Lauf der Zeit verändernder Frequenzspektrum des Audiostroms dargestellt und auch bearbeitet werden kann. Damit kann unter Rückgriff auf die genannten Bearbeitungsmethoden beispielsweise ein ganzes Musikstück oder dergleichen in seinen klanglichen Eigenschaften wunschgemäß verändert werden. Die Bearbeitung des Audiostroms kann dabei auf der Grundlage eines abgespeicherten oder hinterlegten Audiostroms oder auch in der Art einer Online-Bearbeitung direkt während des Abspielens des Audiostroms erfolgen.

Ein derartiges Verfahren gemäß Oberbegriff des Anspruchs 1 ist beispielsweise bekannt aus Anne Sedes et al. "Visualization of Sound as a control interface", Proc. of 7th int. Conference on digital audio effects, DAFX 04: Naples, Oct 5 - 8, 2004, S. 390 - 394.

Der Erfindung liegt die Aufgabe zugrunde, ein Verfahren zum Editieren eines Audiosignals der oben genannten Art anzugeben, mit dem auf besonders einfache und für den Nutzer intuitiv verständliche Weise auch vergleichsweise komplexe Modifikationen am Audiostrom vorgenommen werden können. Des Weiteren soll ein zur Durchführung des Verfahrens besonders geeigneter Audioeditor angegeben werden.

Bezüglich des Verfahrens wird diese Aufgabe erfindungsgemäß gelöst mit den Merkmalen des Anspruchs1. Die graphische Modifikation greift dabei insbesondere auf Algorithmen der Bildverarbeitung zurück, so dass Bild- und Tonverarbeitungsverfahren fusioniert werden.

Mit anderen Worten: das Verfahren zum Editieren des Audiosignals ist somit im Wesentlichen darauf ausgerichtet, einen oder mehrere eingehende Audioströme in die Frequenz-Domäne zu transformieren und als Frequenzspektrum darzustellen, diese Darstellung über einen berührungsempfindlichen Bildschirm mit Mehrfinger-Eingabe, insbesondere ein so genanntes Multi-Touch-Display, zu modifizieren und das daraus resultierende Bild oder Frequenzspektrum wieder in die Zeit-Domäne zurück zu transformieren.

Die Erfindung geht über den Funktionsumfang üblicher Audioeditoren hinaus, weil durch die Multi-Touch-Bedienung eine parallele und funktionsmäßig erweiterte Bearbeitung des Frequenzspektrums möglich wird. Die bisher übliche Methode: 1 - Selektion eines einzelnen Frequenzbandes und 2 - Modifikation dieses Frequenzbandes, wird durch Multi-Touch erweitert, weil mehrere Frequenzbänder gleichzeitig und mit einem wesentlich erweiterten Satz von Bearbeitungs-möglichkeiten verändert werden können. Der erweiterte Satz von Bearbeitungs-möglichkeiten wird durch Multitouch ermöglicht, weil Fingergesten geeignet sind, auch komplexe Veränderungsfunktionen in intuitiver Weise auf das Veränderungsobjekt (das Frequenz-Spektrum) zu übertragen.

Die durch Multitouch ermöglichte gleichzeitige und individuelle Bearbeitung mehrerer Frequenz-Bänder gekoppelt mit der (durch Fingergesten ermöglichten) Erweiterung der Veränderungsfunktionen erlaubt Zeitvorteile und eine intuitive Bedienung bei der Realisierung von komplexen Modifikationen. Das Ergebnis sind neue und komplexe Audio-Bearbeitungsmöglichkeiten mit schneller und intuitiver Bedienung als auch die Verkürzung von Bearbeitungszeiten durch Parallelisierung.

Um im Vergleich dazu auch komplexe Modifikationen am Frequenzspektrum in der Art einer komprimierten und somit besonders benutzerfreundlichen und vereinfachten Weise zu ermöglichen, sollte das Editierverfahren daher grundsätzlich unabhängig vom selektiven Zugriff auf einzelne Frequenzbänder des Frequenzspektrums ausgelegt sein. Im Gegensatz dazu sollte vielmehr eine gemeinsame oder parallele Bearbeitung einer Mehrzahl oder einer Vielzahl von Parametern im Frequenzspektrum durch den Benutzer ermöglicht sein. Eine derartige, besonders benutzerfreundlich ausgerichtete Zusammenfassung verschiedener Parameter bei der Bearbeitung oder Modifikation des Frequenzspektrums ist auf besonders intuitive und leicht für den Benutzer verständliche Weise erreichbar durch den Rückgriff auf einen berührungsempfindlichen Bildschirm als Eingabemedium, wobei dieser für eine so genannte Mehrfinger-Eingabe oder einen so genannten Multi-Tuch-Bedienmodus ausgelegt sein sollte.

Bei einer derartigen Mehrfinger-Eingabe werden die Berührpositionen von zwei oder mehr Fingern am berührungsempfindlichen Bildschirm sowie bedarfsweise auch deren zeitlicher Verlauf oder deren zeitliche Veränderung erfasst. Auf diese Weise ist es ermöglicht, eine Modifikation des auf dem Bildschirm angezeigten Frequenzspektrums mittels Fingergesten des Benutzers vorzunehmen.

Die Ausgestaltung eines berührungsempfindlichen Bildschirms für eine Mehrfinger-Eingabe in anderem Zusammenhang ist beispielsweise bekannt aus der US2007/0252821A1. Aus der US200410150668A1 ist zudem ein Konzept für eine Mehrfinger- Eingabe bekannt, bei dem durch die Berührung des Bildschirms mit einem ersten Finger ein Menü bereitgestellt wird, aus dem durch Verschieben des zweiten Fingers eine Option ausgewählt werden kann, die durch Loslassen des zweiten Fingers aktiviert wird.

Demgegenüber ist nun vorgesehen, dass bei Berührung des Bildschirms durch einen ersten Finger (insbesondere dem Zeigefinger) kontext- und positionsabhängig vom Berührpunkt ein Menü mit einer Anzahl auswählbarer Steueroptionen geöffnet wird, von denen anschließend eine durch Berührung des Bildschirms durch einen zweiten Finger zur Ausführung ausgewählt wird. Dabei wird insbesondere ein kontext- und positions-sensitives Menü relativ zur Position des ersten Fingers angezeigt, wobei die innerhalb dieses Menüs auswählbaren Aktionen oder Punkte vorteilhafterweise derart in der Nähe des Berührungspunktes auf dem Bildschirm positionert sind, dass die mit dem zweiten Finger für den Benutzer zur Auswahl leicht errelchbar sind.

Im Rahmen der Mehrfinger-Eingabe können Berührungsereignisse des Bildschirms von drei oder mehr Fingern in zeitlich korrelierten Weise geeignet berücksichtigt werden, um auch besonders komplexe Eingaben besonders effektiv bearbeiten zu können, Eine besonders einfache Erkennung von verschiedenartigen Steuerbefehlen unter unmittelbarer Umsetzung in geeignete Manipulationen das Datensatzes ist aber erreichbar, indem die zur Modifikation des Frequenzspektrums zu berücksichtigenden Steuerbefehle In besonders vorteilhafter Weiterbildung anhand einer Zweifinger-Elngabe am berührungsempfindlichen Bildschirm eingelesen werden.

Die Modifikation des Frequenzspektrums über die Mehrfinger-Eingabe kann auf verschiedenartige Weise ausgestaltet sein, wobei insbesondere der so genannte Touch-Modus oder Berührungs-Modus bedarfsabhängig geeignet voreingestellt sein kann. Dabei ist insbesondere der Effekt, den eine Fingergeste auf das dargestellte Spektrum hat, abhängig vom eingestellten Touch- oder Berührungsmodus. Der Berührungsmodus kann dabei beispielsweise das Spektrum rotieren, skalieren, in ausgewählten Dimensionen verwischen oder sonstige Effekte auslösen.

Darüber hinaus ist es auch möglich, Teilbereiche des Spektrums, die einen musikalischen Zeitabstand repräsentieren, isoliert zu modifizieren, um damit den Wert der Manipulation oder Modifikation des Audiostroms in musikalischer Hinsicht zu erhöhen. Diese isolierten Teilbereiche können dann Insbesondere auch entlang der Zeitachse wiederholt werden. Die Fingergesten, also insbesondere auch der zeitliche Verlauf der Berührungen des Bildschirms durch zwei oder mehr Finger, können unmittelbar den aktuellen zeitlichen Teilbereich betreffen oder auch für einen späteren, musikalisch sinnvolleren Zeitpunkt festgelegt werden. In einem derartigen Fall kann auch vorgesehen sein, dass das Frequenzspektrum zwischen dem aktuellen istzustand und einem Zieizustand interpoliert wird, bis der vorgesehene musikalisch sinnvolle Zeitpunkt eintritt. Beispielsweise kann im Beruhrungsmodus "Time-Stretching" eine Fingergeste insbesondere auch eine gezielte Manipulation ausgewählter Zeitintervalle im Audiostrom, beinhalten. Dies kann insbesondere dazu führen, dass ein Teil des Audiomaterials zwischen verschiedenen Tempi synchronisiert interpoliert wird, während das Haupttempo mit dem verbleibenden Teil des Audiomaterials konstant gehalten wird.

Vorteilhafterweise wird das modifizierte Frequenzspektrum ebenfalls auf dem berührungsempfindlichen Bildschirm dargestellt. Damit ist es für den Benutzer möglich, auch nach einer bereits vorgenommenen Manipulation oder Modifikation des Frequenzspektrums eine erneute Modifikation im Sinne einer Weiterverbesserung oder Weiterveränderung des Frequenzspektrums vorzunehmen. Dabei wird das dargestellte modifizierte Frequenzspektrum zweckmäßigerweise anhand von Steuerbefehlen erneut modifiziert, die über eine weitere Mehrfinger-Eingabe eingelesenen werden.

Zur Bearbeitung wird der Audiostrom zweckmäßigerweise in einen Zwischenspeicher oder Buffer, vorzugsweise einen so genannten "streamenden Buffer", eingelesen, der vorteilhafterweise die Länge einer vorher spezifizierten musikalischen Zeiteinheit aufweist. Unter Darstellung in der Frequenz-Domäne wird dieser Buffer vorteilhafterweise anhand der Fingergesten manipuliert. Die Manipulation oder Modifikation kann dabei grundsätzlich aufgrund eines gespeicherten Audiostroms erfolgen, wobei der modifizierte oder editierte Audiostrom anschließend für eine zukünftige Verwendung ebenfalls geeignet abgespeichert wird. Alternativ und vorteilhafterweise ist das Verfahren aber für eine Echtzeit oder Online-Modifikation des Audiostroms bzw. des Streaming Buffers ausgelegt, wobei der eintreffende Audiostrom zunächst für eine Bearbeitung transformiert und in Form des Sreaming Buffers bereit gestellt wird. Anschließend wird der erzeugte Ausgangs-Audiostrom an eine geeignete Ausgabeeinheit, beispielsweise ein Musik- oder Lautsprechersystem, weitergeleitet. Um dabei auch eine fortlaufende Weiterbearbeitung des Audiostroms bzw. des Streaming Buffers zu ermöglichen, kann zweckmäßigerweise vorgesehen sein, den erzeugten Ausgangs-Audiostrom zusätzlich zur Ausgabe an das nachgeschaltete System für eine zyklische weitere Bearbeitung als neuen eingehenden Audiostrom bereitzustellen und dem zugeordneten Audioeditor somit eingangsseitig erneut zuzuführen.

Alternativ oder zusätzlich kann eine wiederholte und aktualisierte Bearbeitung des Audiostroms auch im Frequenzraum, also ohne zwischenzeitliche Rücktransformation, erfolgen. Dabei können in der Art einer mehrstufigen oder sequentiellen Bearbeitung mehrere Modifikationen hintereinander am Frequenzspektrum vorgenommen werden, wobei dieses bedarfsweise zwischenzeitlich, also zwischen zwei Bearbeitungsphasen, geeignet in einem Zwischenspeicher oder Buffer abgespeichert werden kann. Insbesondere kann eine wiederholte und aktualisierte Bearbeitung des Audiostroms auch durch wiederholtes Anwenden der momentan gespeicherten Grafik-Transformationen für das Frequenzspektrum erreicht werden. Dabei wird insbesondere die Modifikation fortlaufend im Frequenzraum am Frequenzspektrum vorgenommen, das vorzugsweise parallel zur Audioausgabe jeweils fortlaufend in aktualisierte Audioströme rücktransformiert wird. Die fortlaufende Bearbeitung des Spektrums entspricht dabei insbesondere einem konstanten Loopen des gestreamten Buffers. Durch diese zyklische Bearbeitung, also dadurch, dass die Transformation (FFT) loopt, können Modifikationen für in der Zukunft liegende Takte vorgeplant werden.

Vorteilhafterweise ist das Verfahren für eine zeitlich fortlaufende Bearbeitung des Audiostroms ausgelegt. Dazu wird zweckmäßigerweise das aus dem eingehenden Audiostrom erzeugte Frequenzspektrum in Zeitabschnitte zerlegt, wobei die dabei erhaltene zeitabhängige Entwicklung des Frequenzspektrums vorteilhafterweise geeignet in einer dreidimensionalen Grafik dargestellt wird. Vorzugsweise wird dabei die dreidimensionale Darstellung in Form einer so genannten "Waterfall"-Anzeige vorgenommen, bei der die einzelnen, zeitabhängig ermittelten Frequenzspektren zeitlich geordnet in einer 3D-Grafik auf dem berührungsempfindlichen Bildschirm dargestellt werden. Gerade bei einer derartigen Darstellung kann die vorgesehene Mehrfinger-Eingabe in besonders vorteilhafter Weiterbildung auch zur Beeinflussung der eigentlichen dreidimensionalen Darstellung genutzt werden, wobei diese beispielsweise rotiert, gezoomt oder auf sonstige Weise modifiziert werden kann.

Nach geeigneter Vorbereitung der dreidimensionalen Darstellung, also beispielsweise nach Erzeugung eines bestimmten Blickwinkels auf die 3-D-Grafik, kann eine Multitouch-Eingabe je nach Blickwinkel unterschiedliche Ergebnisse erzielen. Das bedeutet, dass nach Rotation der Ansicht der dreidimensionalen Darstellung gleichartige Fingergesten darstellungsabhängig ganz verschiedenartige Resultate ermöglichen (je nachdem, in welchem Maße sie die Dimensionen Zeit, Frequenz oder Amplitude beeinflussen). Beispielsweise kann dabei die Ansicht derart rotiert werden, dass lediglich die Zeit- und die Amplitudenachse sichtbar ist, wobei eine mit der Aktion "Dämpfung/Verstärkung" verknüpfte Fingergeste in einer globalen Anhebung oder Reduzierung der Lautstärke für alle Frequenzen resultieren würde. Im Gegensatz dazu kann bei andersartig rotierter Darstellung, bei der lediglich die Frequenzachse und die Amplitudenachse sichtbar sind, dieselbe Fingergeste in einer selektiven Anhebung oder Absenkung der Amplitude lediglich für die ausgewählte Frequenz resultieren. Weiterhin könnte eine Rotation der Ansicht zu einer perspektivischen Darstellung, in der alle drei Achsen (Zeitachse, Frequenzachse und Amplitudenachse) sichtbar sind, eine gezielte Dämpfung oder Verstärkung ausgewählter Frequenzen zu bestimmten Zeitpunkten ermöglichen.

In besonders vorteilhafter Weiterbildung oder auch als eigenständig erfinderisches Konzept ist alternativ oder zusätzlich in der Art einer parallelen Bearbeitung eine gemeinsame Darstellung einer Mehrzahl von Audioströmen in Form der diese jeweils repräsentierenden Frequenzspektren vorgesehen. Dazu werden vorteilhafterweise mehrere eingehende Audioströme, auch als "Eingangskanäle" bezeichnet, in zugeordnete Frequenzspektren transformiert. Diese werden sodann gemeinsam, also insbesondere additiv überlagert, auf dem Bildschirm bzw. im Streaming-Buffer dargestellt. In weiterer vorteilhafter Ausgestaltung werden die den unterschiedlichen Audioströmen oder Eingangskanälen jeweils zugeordneten Frequenzbeiträge oder -spektren dabei voneinander unterscheidbar, insbesondere farblich voneinander verschieden, dargestellt, so dass der Bediener beim Editieren die Auswirkungen auf und die Beiträge von einzelnen Eingangskanälen direkt erfassen und mitverfolgen kann. Dies bedeutet, dass die spektrale Darstellung auf dem Bildschirm verschiedene Farben für verschiedene Audioströme oder Eingangskanäle hat, die gleichzeitig dargestellt werden. Damit ist auch eine spezifische Beeinflussung der jeweiligen Beiträge der einzelnen Eingangskanäle unter Rückgriff auf farbbasierte Operationen, beispielsweise Farbfilterung oder Farbmorphing ermöglicht.

Bezüglich des Audioeditors wird die genannte Aufgabe gelöst mit den Merkmalen des Anspruchs 10.

Der Zwischenspeicher ist dabei vorzugsweise zum Abspeichem eines Audiostroms mit der Länge einer musikalischen Zeiteinheit geeignet, und er speichert den Audiostrom nach der Transformation. Der Audiostrom kann aus mehreren Kanälen bestehen.

Der Zwischenspeicher oder Buffer ist dabei vorteilhafterweise adaptierbar ausgelegt, so dass der hierdurch abgedeckte Zeitraum an eine vorher - ggf. durch informationsaustausch mit dem den Audiostrom sendenden System - festgelegte musikalische Zeiteinheit anpassbar ist. Dabei kann insbesondere in der Art einer Zusatzinformation zum Audiostrom im Vorfeld oder parallel zu dessen Übermittlung eine vorgeschlagene musikalische Zeiteinheit, beispielsweise eine Taktzeit, eine Taktrate und/oder ein Vielfaches oder ein Bruchteil von diesen, an den Editor des Audiosignals übermittelt werden. Dieser kann sodann in Reaktion hierauf und ggf. im Rahmen einer vorgegebenen möglichen Bandbreite eine günstige musikalische Zeiteinheit oder Taktrate vorschlagen und/oder mit dem Sender des Audiostroms abstimmen, so dass eine Synchronisation zwischen der musikalischen Zeiteinheit und der Buffer- oder Speicherlänge eintritt.

Die für die Transformation des Audiostroms in die Frequenz-Domäne und umgekehrt für die Transformation des modifizierten Frequenzspektrums in die Zeit-Domäne vorgesehene Transformationseinheit ist dabei vorzugsweise unter Rückgriff auf etablierte Transformationsverfahren wie beispielsweise einer Fast-Fourier-Transformation (FFT) oder dergleichen ausgelegt.

Die mit der Erfindung erzielten Vorteile bestehen insbesondere darin, dass durch die Verwendung eines berührungsempfindlichen Bildschirms unter Zugrundelegung von Fingergesten oder Mehrfinger-Eingaben als Eingabemedium für die Bearbeitung und Modifikation des Frequenzspektrums auf besonders einfache, benutzerfreundliche und intuitive Weise auch eine vergleichsweise komplexe Modifikation des Frequenzspektrums oder auch der zeitlichen Abfolge der Frequenzspektren innerhalb des Audiostroms ermöglicht ist. Damit kann der Benutzer intuitiv und auf besonders einfache Weise komplexe, unter anderem auch Verknüpfungen einer Vielzahl verschiedenartiger Parameter bedingende Veränderungen im Frequenzspektrum vornehmen, und damit musikalisch völlig neuartige und unerwartete Effekte bei der Bearbeitung des Audiostroms bewirken. Damit ist einerseits eine Vereinfachung bereits etablierter Parametermanipulationen im Frequenzspektrum und andererseits auch die Bereitstellung vollständig neuer Modifikationstypen im Frequenzspektrum erreichbar.

Zudem ist eine besonders einfache und wirkungsvolle Bearbeitung von Audioströmen oder sogenannter Streaming-Buffers für eine gezielte Modifikation von Sounds durch DJs, im Tonstudio oder auch für sonstige Anwendungen mit akustischen Effekten, beispielsweise die Modifikation von Sprache am Telefon, die Modifizierung von Tonausgaben in Earplugs oder Kopfhörern oder dergleichen, ermöglicht. Es besteht somit eine besonders einfach gehaltene Möglichkeit, visuell dargestelltes Audiomaterial mittels Multi-Touch-Gesten zu verändern und die resultierende Darstellung (die auch Animation beinhalten kann, die ihrerseits in Modulation resultiert) wieder in Audio umzuwandeln. Es besteht zusätzlich die Möglichkeit, mit Hilfe des dargestellten Audiomaterials eine Video-Ausgabe zu generieren, die mit der dargestellten, vom Nutzer gehörten Musik korrespondiert. Durch die grundlegende Idee, Image-Processing-Algorithmen auf das Spektrum oder auf Teile des Spektrums, dessen Länge insbesondere eine musikalische Zeiteinheit repräsentieren kann, anzuwenden und die modifizierte Darstellung wieder in Audio umzuwandeln, ergibt sich eine enge Bezeichnung zwischen Sehen und Hören, im Sinne von "See what you hear and hear what you see".

Alternativ oder zusätzlich kann das erhaltene Frequenzspektrum auch in geeigneter Form zwischengespeichert und für eine spätere Nachbearbeitung oder dergleichen bereitgehalten werden. Beispielsweise kann das Spektrum, welches als zweidimensionale Matrix dargestellt wird, in beliebiger Form gespeichert werden. Zur Modifikation können unter anderem auch arithmetische Operationen mit einer anderen, auf gleich Weise erzeugten Matrix angewendet werden, so dass korrelierte oder verschränkte Audioströme entstehen.

Besonders vorteilhaft ist, wenn mehrere (Eingangs-) Kanäle von gestreamtem Audio in Echtzeit transformiert und eingefärbt werden. Diese Einfärbung erlaubt farbspezifische Modifikationen der einzelnen Kanäle bzw. der Relationen dieser Kanäle zueinander. Der Buffer loopt (also arbeitet zyklisch oder schleifenartig) und aktualisiert sich konstant. Er kann in musikalische Zeiteinheiten unterteilt werden, die vorzugsweise kleiner als die musikalische Zeiteinheit des Buffers sind, und die ihrerseits unabhängig voneinander bearbeitet werden können.

Ein Ausführungsbeispiel der Erfindung wird anhand einer Zeichnung näher erläutert. Darin zeigen:
- FIG 1: schematisch einen Audioeditor,
- FIG 2: eine 3D-Graphik mit einer Mehrzahl von Frequenzspektren, und
- FIG 3: einen Eingabe-Bildschirm des Audioeditors gemäß FIG 1.

Gleiche Teile sind in allen Figuren mit denselben Bezugszeichen versehen.

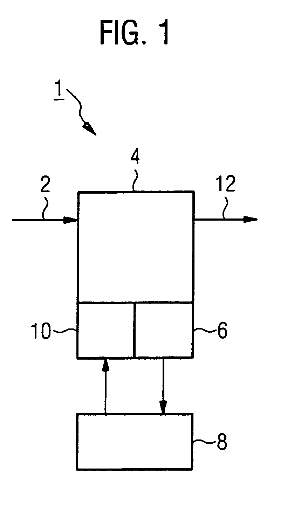

Der Audioeditor 1 gemäß FIG 1 ist zur gezielten Modifikation und Bearbeitung eines eingehenden, ein Audiosignal repräsentierenden Audiostroms 2 vorgesehen. Dazu umfasst der Audioeditor 1 einen Zwischenspeicher 4, der als Spektrale Matrix oder als Streaming Buffer ausgelegt ist, in den der eingehende Audiostrom 2 zunächst eingelesen wird. Dem Zwischenspeicher 4, welcher als zweidimensionale Matrix ausgelegt ist, sind die Transformationseinheiten 10 und 6 zugeordnet. Die Transformationseinheit 10 transformiert den eingelesenen Audiostrom 2 in das Frequenzspektrum und speichert dieses in den Zwischenspeicher 4. Dieser wird dann wieder in den Audiostrom 12 mit der Transformationseinheit 6 zurück transformieren. Das Frequenzspektrum aus dem Zwischenspeicher (4) wird auf einem zugeordneten berührungsempfindlichen Bildschirm 8 zur Anzeige gebracht. Die Transformation des Audiostroms in das Frequenzspektrum - und zurück- erfolgt dabei in den Transformationseinheiten 10 und 6 unter Rückgriff auf übliche Transformationsverfahren wie beispielsweise die Fast-Fourier-Transformation, mit der eine Umsetzung des Audiostroms aus der Zeit-Domäne in die Frequenz-Domäne möglich ist.

Der berührungsempfindliche Bildschirm 8 ist als so genannter Multi-Touch-Screen und damit zur Erfassung von Zwei- oder Mehrfingerberührungen ausgelegt. Solchermaßen erfasste Mehrfinger-Berührungen werden in der Art einer Mehrfinger-Eingabe vom berührungsempfindlichen Bildschirm 8 als Steuerbefehle an eine Bearbeitungseinheit 13 ausgegeben, die anhand der über den berührungsempfindlichen Bildschirm 8 erfassten Steuerbefehle Modifikationen am dargestellten Frequenzspektrum vornimmt. Das modifizierte Frequenzspektrum wird sodann erneut an den Bildschirm 8 ausgegeben und dort dargestellt, so dass eine erneute Modifikation durch den Benutzer über Mehrfinger-Eingaben erfolgen kann. Zudem und parallel dazu wird das modifizierte Frequenzspektrum aus dem Zwischenspeicher 4 von der Bearbeitungseinheit 6 in die Zeit-Domäne zurücktransformiert und als Ausgangsaudiostrom 12 ausgegeben, von wo aus das dadurch repräsentierte editierte Audiosignal einer weiteren Nutzung, beispielsweise einer Lautsprechereinheit oder dergleichen, bereitgestellt wird.

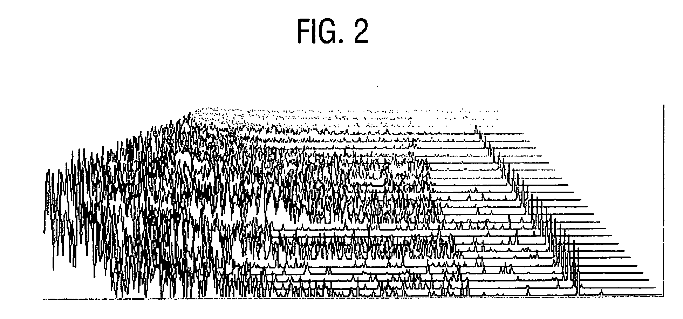

Der Audioeditor 1 ist für eine zeitabschnittsweise Bearbeitung des eingehenden Audiostroms 2 ausgelegt, wobei der eingehende Audiostrom 2 zeitabschnittsweise in zugeordnete Frequenzspektren transformiert wird und diese zeitlich geordnet in dreidimensionaler Ansicht auf dem Bildschirm 8 dargestellt werden. Die Darstellung erfolgt dabei im Ausführungsbeispiel in der Art einer "Waterfall"-Grafik, bei der die ermittelten Frequenzspektren zeitlich geordnet hintereinander dargestellt werden. Ein Beispiel für eine derartige dreidimensionale Darstellung in der Art einer "Waterfall"-Grafik ist in FIG 2 gezeigt. In dieser Ansicht sind Frequenzspektren, bei denen jeweils die Amplitude des Audiosignals als Funktion der Frequenz dargestellt ist, entsprechend ihrer zeitlichen Reihenfolge hintereinander dargestellt. Die dreidimensionale Darstellung umfasst somit die Amplitudenachse, die Frequenzachse und die Zeitachse. Der Audioeditor 1 ist nunmehr dafür ausgelegt, eine derartige dreidimensionale Darstellung des eingehenden Audiostroms, vorzugsweise in Real- oder Echtzeit, über den als Multi-Touch-Screen ausgelegten berührungsempfindlichen Bildschirm 8 zu manipulieren.

Für die Darstellung und Manipulation des Audiostroms sind zwei generelle Betriebsweisen oder Modi denkbar, nämlich einerseits eine instantane Manipulation des dargestellten Audiostroms in Echtzeit, wobei in Echtzeit eine Aktualisierung des dargestellten Frequenzspektrums in der Art der genannten "Waterfall"-Darstellung vorgenommen wird. Alternativ kann auch eine zuvor eingelesene Gesamtheit des Audiostroms dargestellt und unabhängig von Echtzeiteffekten bearbeitet werden.

Hinsichtlich der Eingabemodi sind ebenfalls verschiedene Betriebsweisen denkbar. Beispielsweise könnte bei einer Berührung des Bildschirms 8 eine Manipulation der Daten begrenzt auf diejenigen Daten sein, die in der Darstellung in etwa der Größe der Fingerspitze entsprechen. Alternativ könnten zwei Finger genutzt werden, um einen rechteckigen oder anders geformten Teilbereich des Bildschirms 8 für die vorgesehene Manipulation zu spezifizieren.

Weiterhin kann die Darstellung an sich durch geeignete Modifikation über die Mehrfinger-Eingabe manipuliert werden. Dabei kommt insbesondere bei der dreidimensionalen Darstellung, wie in FIG 2 gezeigt, eine Rotation um vorgebbare Achsen in Betracht, so dass beispielsweise zwischen perspektivischer Darstellung, Darstellung im Zeitbereich und Darstellung im Frequenzbereich gewechselt werden kann. Abhängig von der jeweils gewählten Perspektive kann dabei die einem Berührungsmodus zugrunde liegende Fingergeste als unterschiedliche Eingabe, beispielsweise globales Absenken und Anheben von Lautstärken oder frequenzselektives Absenken oder Anheben einzelner Amplituden, gewählt werden.

Vorzugsweise können folgende Berührungsmodi als Steuerbefehle zur Bearbeitung des Frequenzspektrums hinterlegt sein:
- Verstärkung: Die Lautstärke der durch Berührung ausgewählten Zone, insbesondere einer einzelnen Frequenzamplitude oder eines Teilspektrums, wird angehoben oder abgesenkt.
- Abschneiden: Die Amplitude der durch Berührung ausgewählten Zone wird auf Null gesetzt.
- Zeitwiederholung: Erzeugt eine Wiederholung der durch Berührung ausgewählten Zone entlang der Zeitachse. Für eine synchronisierte rhythmische Manipulation könnte hierbei die durch Berührung ausgewählte Zone quantisiert und das Wiederholungsintervall an ein vorgegebenes musikalisches Gitter oder einen Takt angepasst werden.
- Frequenzwiederholung: Die durch Berührung ausgewählte Zone wird entlang der Frequenzachse wiederholt.
- Ersetzung: Die durch Berührung mit dem ersten Finger ausgewählte Zone wird durch die durch Berührung mit dem zweiten Finger ausgewählte Zone ersetzt.
- Bewegen: Die durch Berührung ausgewählte Zone wird frei an eine andere Stelle innerhalb des Spektrums bewegt. Hiermit könnten beispielsweise selektiv verschiedene Formate, also Energy-Peeks im Spektrum, welche die Klangfarbe und den Pitch des Audiostroms definieren, verschoben werden.
- Revers: Die durch Berührung ausgewählte Zone wird invertiert. Hiermit könnten in musikalischer Hinsicht interessante Resultate erzielbar seien, wenn beispielsweise lediglich bestimmte Teile des Spektrums invertiert werden.
- Geschwindigkeitsmanipulation: Die ausgewählte Zone wird schneller oder langsamer gestellt.
- Zeitdehnung: Die gesamte Spektrenform wird zeitlich gestreckt oder komprimiert. Abhängig von der Implementierung ist es möglich, lediglich einen ausgewählten Anteil des Spektrums innerhalb der Wellenform zeitlich zu strecken oder zu komprimieren. Bildbearbeitungsverfahren erlauben es sogar, die Zeit so sehr zu komprimieren, bis sie umdreht und "rückwärts spielt".
- Pitch Shift, also Verschiebung der Tonhöhe: Frequenzen könnten logarithmisch verschoben werden, was einer linearen Verschiebung der wahrgenommenen Tonhöhe entspricht.
- Rotation: Die Matrix wird um die Z-Achse rotiert. Diese Rotation kann auch skaliert - das heißt ungleichmäßig - verlaufen.
- Skalierung: Das Spektrum kann in beliebiger Dimension verzerrt werden.
- Schmieren: Einzelne Bildpunkte werden, 'bhängig von einem Durchschnittswert, welcher mit Hilfe benachbarter Bildpunkte errechnet wird, erneut gesampelt. Hierdurch kann eine Unschärfe bzw. eine Weichzeichnung des Bildes als auch des Audiomaterials erreicht werden.
- Zufälliges Verschieben einzelner Bildpunkte: Die einzelnen Bildpunkte werden nach bestimmten Regeln z. B. in Form von Noise-Funktionen displatziert. Je nach angewandter Noise-Funktion wird das ursprüngliche Audiosignal entfremdet, ist allerdings noch immer erkenntlich.
- Resampling von Bereichen: Diese Noise-Funktionen können auch auf Bereiche der Matrix (anstelle von einzelnen Bildpunkten) angewandt werden. Die Bereiche können displatziert werden und auch in sich geändert bzw. mit weiteren Noise-Funktionen bearbeitet werden. Dies stellt eine Art bildlichen Kaleidoskop-Effekt dar, welcher sehr interessante Musikalische Ergebnisse erzielen kann.

Bei allen genannten Bearbeitungsverfahren, insbesondere bei den Verfahren, welche zufällige Verschiebungen beinhalten, sei angemerkt, dass das Ergebnis immer in ein musikalisch sinnvolles Zeitraster fallen muss. Dadurch bleibt selbst das Ergebnis von sehr umfangreichen Bearbeitungen musikalisch sinnvoll.

Natürlich sind noch eine Vielzahl weiterer Bildbearbeitungsverfahren denkbar, insbesondere das Ausnutzen der Farbinformationen der einzelnen Kanäle, um zum Beispiel frequenz-genaues Mixing zu erreichen (durch das Stutzen von überlappenden Farbwerten) oder das farbliche (und hörbare) Morphen zwischen den einzelnen Kanälen.

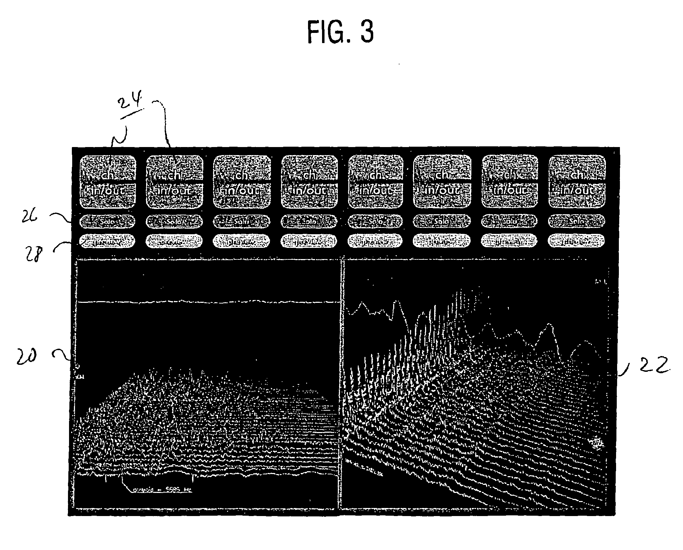

Ein Beispiel für eine Bedienoberfläche des Audioeditors 1 ist in FIG 3 dargestellt. Die Bedienoberfläche gemäß FIG 3 weist im Ausführungsbeispiel zwei Darstetlungszonen 20, 22 auf; selbstverständlich können aber auch lediglich eine oder noch mehr Darstellungsflächen vorgesehen sein. Im oberen Bereich des Bildschirms sind darüber hinaus eine Anzahl aktivierbarer Schaltflächen 24 vorgesehen, deren Berührung über den berührungsempfindlichen Bildschirm 8 gewünschte Manipulationsreaktionen in der Art von Steuerbefehlen auslöst.

Die Schaltflächen 24 sind dabei insbesondere dafür vorgesehen, globale Veränderungen des eingehenden Audiostroms vorzunehmen. Die Schaltflächen 24 sind dabei insbesondere derart ausgestaltet, dass die Wellenform des eingehenden Audiostroms innerhalb der jeweiligen Schaltfläche 24 darstellbar ist.

Damit ist für den Benutzer unmittelbar erkennbar, welche Art von Audiomaterial an dem jeweils der Schaltfläche 24 zugeordneten Eingang für den Audiostrom verfügbar ist. Unterhalb der jeweiligen Schaltfläche 24 ist eine weitere Schaltfläche 26 und eine Schaltfläche 28 angeordnet. Die Schaltfläche 26 aktiviert dabei jeweils einen "Solo-Modus", wobei die Schaltfläche 28 als "Preview"-Funktion dienen und die unmittelbare Ausgabe des Audiostroms an eine alternative Lautsprechereinheit ermöglichen soll. Zusätzlich wird die Farbe des eingehenden Audiostroms, mit der das diesem zugeordnete Frequenzspektrum dargestellt wird, in der Schaltfläche angezeigt.

Zusätzlich ist in der genannten Art innerhalb der Darstellungszonen 20, 22 das dort jeweils repräsentierte Frequenzspektrum über die genannte Mehrfinger-Eingabe manipulierbar.

### Bezugszeichenliste

- 1: Audioeditor
- 2: Audiostrom
- 4: Zwischenspeicher
- 6: Transformationseinheit
- 8: Berührungsempfindlicher Bildschirm
- 10: Transformationseinheit
- 12: Ausgangsaudiostrom
- 13: Bearbeitungseinheit
- 20,22: Darstellungszonen
- 24, 26,:
- 28: Schaltflächen

## Patentansprüche

1. Verfahren zum Edltleren eines Audiosignals, bei dem ein das Audiosignal repräsentierender eingehender Audiostrom (2) in ein zugeordnetes Frequenzspektrum transformiert und dieses auf einem Bildschirm (8) dargestellt wird, und bei dem das modifizierte Frequenzspektrum in einen zugeordneten Ausgangs-Audiostrom transformiert wird, der das editierte Audiosignal repräsentiert, **dadurch gekennzeichnet, dass** das Frequenzspektrum auf einem berührungsempfindlichen Bildschirm (8) dargestellt wird, wobei über den berührungsempfindlichen Bildschirm (8) anhand einer Mehrfinger-Eingabe, bei der die Berührpositionen von zwei oder mehr Fingern am berührungsempfindlichen Bildschirm (8) sowie bedarfsweise auch deren zeitlicher Verlauf oder deren zeitliche Veränderung erfasst werden, Steuerbefehle eingelesen werden, anhand derer das Frequenzspektrum modifiziert wird, wobei bei Berührung des Bildschirms (8) durch einen ersten Finger kontext- und positionsabhängig vom Berührpunkt ein Menü mit einer Anzahl auswählbarer Steueroptionen geöffnet und relativ zur Position des ersten Fingers angezeigt wird, wobei die innerhalb dieses Menüs auswählbaren Aktionen oder Punkte derart in der Nähe des Berührpunktes auf dem Bildschirm (8) positioniert werden, dass sie mit einem zweiten Finger für den Benutzer zur Auswahl leicht erreichbar sind, und wobei anschließend eine der Steueroptionen durch Berührung des Bildschirms (8) durch den zweiten Finger zur Ausführung ausgewählt wird.

2. Verfahren nach Anspruch 1, bei dem die zur Modifikation des Frequenzspektrums zu berücksichtigenden Steuerbefehle anhand einer Zweifinger-Eingabe eingelesen werden.

3. Verfahren nach Anspruch 1 oder 2, bei dem das modifizierte Frequenzspektrum auf dem berührungsempfndlichen Bildschirm (8) dargestellt wird.

4. Verfahren nach Anspruch 3, bei dem das dargestellte modifizierte Frequenz-spektrum anhand von durch eine weitere Mehrfinger-Eingabe eingelesenen weiteren Steuerbefehlen erneut modifiziert wird.

5. Verfahren nach einem der Ansprüche 1 bis 4, bei dem der erzeugte Ausgangs-Audiostrom für eine nachfolgende weitere Bearbeitungsphase als eingehender Audiostrom (2) bereitgestellt wird.

6. Verfahren nach einem der Ansprüche 1 bis 5, bei dem das durch die Transformation erhaltene Frequenzspektrum in Zeitabschnitte unterteilt wird, wobei diese zeitlich geordnet in einer 3D-Graphik auf dem berührurigsempfindlichen Bildschirm (8) dargestellt werden.

7. Verfahren nach Anspruch 6, bei dem über den berührungsempfindlichen Bildschirm (8) anhand einer Mehrfinger-Eingabe Steuerbefehle für die Anzeige der 3D-Graphik eingelesen werden.

8. Verfahren nach einem der Ansprüche 1 bis 7, bei dem eine Mehrzahl von Audioströmen (2) in zugeordnete Frequenzspektren transformiert und diese gemeinsam auf dem Bildschirm (8) dargestellt werden.

9. Verfahren nach Anspruch 8, bei dem die den unterschiedlichen Audioströmen (2) jeweils zugeordneten Frequenzspektren farblich unterschiedlich zueinander dargestellt werden.

10. Audioeditor (1) zur Durchführung des Verfahrens nach einem der Ansprüche 1 bis 9 mit einem Zwischenspeicher (4) für einen Audiostrom (2), mit einer Transformationseinheit, die dafür ausgelegt ist, aus einem eingelesenen Audiostrom (2) ein Frequenzspektrum zu erzeugen, und mit einer Bearbeitungseinheit (10) zur Modifikation des Frequenzspektrums, **gekennzeichnet durch** einen zur Darstellung des Frequenzspektrums vorgesehenen berührungsempfindlichen Bildschirm (8), der zur Erfassung von Steuerbefehlen für die Modifikation und/oder für die Darstellung des Frequenzspektrums anhand einer Mehrfinger-Eingabe ausgelegt ist.

## Claims

1. A method for editing an audio signal, wherein an incoming audio stream (2) representing the audio signal is transformed into an associated frequency spectrum and the latter is represented on a screen (8), and wherein the modified frequency spectrum is transformed into an associated output audio stream representing the edited audio signal, **characterized in that** the frequency spectrum is represented on a touch screen (8), control commands, by means of which the frequency spectrum is modified, being read in via the touch screen (8) by means of a multifinger input in which the touch positions of two or more fingers on the touch screen (8) as well as, if needed, also their temporal course or their temporal change are captured, whereby, when the screen (8) is touched by a first finger, a menu with a number of selectable control options is opened as a function of context and position of the touching point and is displayed relatively to the position of the first finger, whereby the actions or items selectable from this menu are positioned on the screen (8) in the vicinity of the touching point in such a way that they are easy to reach by a second finger of the user, and wherein, afterwards, one of the control options is selected for execution by touching the screen (8) with the second finger.

2. The method of claim 1, wherein the control commands to be taken into account for modifying the frequency spectrum are read in by means of a two-finger input.

3. The method of claim 1 or 2, wherein the modified frequency spectrum is represented on the touch screen (8).

4. The method of claim 3, wherein the represented modified frequency spectrum is modified once more by means of additional control commands read in by means of another multifinger input.

5. The method of any of claims 1 to 4, wherein the generated output audio stream is provided as an incoming audio stream (2) for a subsequent further processing stage.

6. The method of any of claims 1 to 5, wherein the frequency spectrum obtained by the transformation is subdivided into time intervals, the latter being represented in temporal order in a 3D graphic on the touch screen (8).

7. The method of claim 6, wherein control commands for the display of the 3D graphic are read in via the touch screen (8) by means of a multifinger input.

8. The method of any of claims 1 to 7, wherein a plurality of audio streams (2) are transformed into associated frequency spectra and the latter are represented together on the screen (8).

9. The method of claim 8, wherein the frequency spectra associated in each case with the different audio streams (2) are each represented in a different color.

10. An audio editor (1) for executing the method of any of claims 1 to 9, having an intermediate storage (4) for an audio stream (2), having a transformation unit designed for generating a frequency spectrum from a read-in audio stream (2), and having a processing unit (10) for modifying the frequency spectrum, **characterized by** a touch screen (8) which is provided for representing the frequency spectrum and which is designed for capturing control commands for modifying and/or representing the frequency spectrum by means of a multifinger input.

## Revendications

1. Procédé pour éditer un signal audio, dans lequel un courant audio (2) entrant, représentant le signal audio, est transformé en un spectre de fréquences y affecté et ce dernier est représenté sur un écran (8), et dans lequel le spectre de fréquences modifié est transformé en un courant audio sortant y affecté, représentant le signal audio édité, **caractérisé en ce que** le spectre de fréquences est représenté sur un écran tactile (8), des instructions de commande, au moyen desquelles le spectre de fréquences est modifié, étant lues à l'aide de l'écran tactile (8) au moyen d'une entrée multi-doigts dans laquelle les positions de contact de deux doigts ou plus sur l'écran tactile (8) ainsi que, si nécessaire, également leur cours dans le temps ou leur variation dans le temps sont saisis, en quoi, lorsque l'écran (8) est touché par un premier doigt, un menu avec un nombre d'options de commande sélectionnables est ouvert en fonction du contexte et de la position du point de contact et est affiché relativement à la position du premier doigt, en quoi les actions ou points sélectionnables de ce menu sont positionnés sur l'écran (8) près du point de contact, de manière qu'ils sont faciles à atteindre par un second doigt de l'utilisateur, et dans lequel, après cela, l'une des options de commande est sélectionnée pour être exécutée par contact du second doigt avec l'écran (8).

2. Procédé selon la revendication 1, dans lequel les instructions de commande à prendre en considération pour modifier le spectre de fréquences sont lues au moyen d'une entrée à deux doigts.

3. Procédé selon la revendication 1 ou 2, dans lequel le spectre de fréquences modifié est représenté sur l'écran tactile (8).

4. Procédé selon la revendication 3, dans lequel le spectre de fréquences modifié, représenté, est modifié à nouveau au moyen d'instructions de commande additionnelles lues au moyen d'une autre entrée multi-doigts.

5. Procédé selon l'une quelconque des revendications 1 à 4, dans lequel le courant audio sortant généré est mis à la disposition comme un courant audio entrant (2) pour un autre stade de traitement subséquent.

6. Procédé selon l'une quelconque des revendications 1 à 5, dans lequel le spectre de fréquences obtenu par la transformation est divisé en des intervalles de temps, ces derniers étant représentés en ordre temporel dans un graphique 3D sur l'écran tactile (8).

7. Procédé selon la revendication 6, dans lequel des instructions de commande pour l'affichage du graphique 3D sont lues à l'aide de l'écran tactile (8) au moyen d'une entrée multi-doigts.

8. Procédé selon l'une quelconque des revendications 1 à 7, dans lequel une pluralité de courants audio (2) est transformée dans des spectres de fréquences y affectés et ces derniers sont représentés ensemble sur l'écran (8).

9. Procédé selon la revendication 8, dans lequel les spectres de fréquences affectés à chaque fois aux différents courants audio (2) sont représentés à chaque fois d'une couleur différente.

10. Un éditeur audio (1) pour exécuter le procédé selon l'une quelconque des revendications 1 à 9, ayant une mémoire intermédiaire (4) pour un courant audio (2), ayant une unité de transformation destinée à générer un spectre de fréquences à partir d'un courant audio (2) lu et ayant une unité de traitement (10) pour modifier le spectre de fréquences, **caractérisé par** un écran tactile (8) qui est prévu pour représenter le spectre de fréquences et qui est destinée à saisir des instructions de commande pour modifier et/ou représenter le spectre de fréquences au moyen d'une entrée multi-doigts.
